# EUROPEAN PATENT APPLICATION

(11) **EP 4 760 666 A1**
(43) Date of publication of application: **17.06.2026**
(21) Application number: 25222296.3
(22) Date of filing: 10.12.2025
(51) Int. Cl.: G07C 9/00, G07C 9/27

(54) **METHODS AND APPARATUSES FOR MANAGING PERSONNEL RECORDS AND CREDENTIALS FOR ACCESS CONTROL**

(30) Priority: 10.12.2024 US 202463730099 P; 09.12.2025 US 202519413862
(71) Applicant: Tyco Fire & Security GmbH, 8212 Neuhausen am Rheinfall (CH)
(72) Inventor: RUTER, Luke, Chelmsford, Massachusetts (US); HOLTON, Glenn Kilburn, Braintree, Massachusetts (US); OUELLETTE, Jason M., Leominster, Massachusetts (US)
(74) Representative: Meissner Bolte Nürnberg

(57) **Abstract**

Aspects of the present disclosure include methods, apparatus, and systems for receiving, at a user management system, a first credential associated with at least one of an end user or a mobile device of the end user, obtaining, at the user management system, a personnel profile of the end user, mapping, based on the personnel profile, the first credential to a list of credentials authorized to access an asset associated with a physical access control security system, and transmitting, from the user management system, the first credential to the physical access control security system.

## Description

This application claims the benefit of U.S. Provisional Application No. 63/730,099, filed on December 10, 2024 and entitled "METHODS AND APPARATUSES FOR MANAGING PERSONNEL RECORDS AND CREDENTIALS FOR ACCESS CONTROL," the contents of which are incorporated by reference herein in the entirety.

The present disclosure relates generally to access control systems, and more specifically, to on-site or cloud-based user management systems that use personnel and/or credential pairings to perform access control decisions, as well as to methods and apparatuses for controlling access.

Physical access control systems are frequently used to protect assets such as buildings, computers, vaults, etc. Physical access control systems are frequently used to protect assets such as buildings, computers, vaults, etc. To access a particular asset, an authorized personnel may be required to authenticate his/her identity to a physical access control system associated with the asset. Once authenticated, the physical access control system may grant the authorized personnel access to the asset. However, for organizations with numerous assets and associated physical access control systems spread across multiple locations, it may not be trivial to digitally manage personnel records and credentials of various personnel across multiple locations. Therefore, improvements are desirable.

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later. Embodiments according to the invention are disclosed in particular in the appended claims.

One aspect of the present disclosure includes a method for controlling access with a credential. The method comprises receiving, at a user management system, a first credential associated with at least one of an end user or a mobile device of the end user. The method further comprises obtaining, at the user management system, a personnel profile of the end user. The method further comprises mapping, based on the personnel profile, the first credential to a list of credentials authorized to access an asset associated with a physical access control security system. The method further comprises transmitting, from the user management system, the first credential to the physical access control security system.

Another aspect of the present disclosure includes a system for controlling access with a credential. The system comprises one or more memories configured to store executable instructions, and one or more processors communicatively coupled with the one or more memories. The one or more processors are configured to execute the executable instructions to receive, at a user management system, a first credential associated with at least one of an end user or a mobile device of the end user. The one or more processors are further configured to execute the executable instructions to obtain, at the user management system, a personnel profile of the end user. The one or more processors are further configured to execute the executable instructions to map, based on the personnel profile, the first credential to a list of credentials authorized to access an asset associated with a physical access control security system. The one or more processors are further configured to execute the executable instructions to transmit, from the user management system, the first credential to the physical access control security system.

Another aspect of the present disclosure includes an apparatus for controlling access with a credential. The apparatus comprises means for receiving, at a user management system, a first credential associated with at least one of an end user or a mobile device of the end user. The apparatus further comprises means for obtaining, at the user management system, a personnel profile of the end user. The apparatus further comprises means for mapping, based on the personnel profile, the first credential to a list of credentials authorized to access an asset associated with a physical access control security system. The apparatus further comprises means for transmitting, from the user management system, the first credential to the physical access control security system.

To the accomplishment of the foregoing and related ends, the one or more aspects comprise the features hereinafter fully described and particularly pointed out in the appended claims. The following description and the appended drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The appended drawings are not necessarily drawn to scale and certain figures of the drawings may be shown in exaggerated or generalized form in the interest of clarity and conciseness. The disclosed aspects will hereinafter be described in conjunction with the appended drawings, provided to illustrate and not to limit the disclosed aspects, wherein like designations denote like elements, and in which:
FIG. 1 is a diagram of an example environment for managing credentials across virtual and physical access control systems, according to some aspects of the present disclosure;
FIG. 2 is a block diagram of an example user management system, according to some aspects of the present disclosure;
FIG. 3 is flow diagram of an example method for managing credentials across virtual and physical access control systems, according to some aspects of the present disclosure; and
FIG. 4 is a block diagram of an example computer system which may implement all or a portion of any component or functionality in FIG. 1, in FIG. 2, and/or in FIG. 3, according to some aspects of the present disclosure.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known components may be shown in block diagram form in order to avoid obscuring such concepts.

Existing virtual access control systems are disconnected from physical access control systems. Due to constantly changing personnel (e.g., a changing workforce), organizations are left with the burden of manually issuing and maintaining both virtual and physical access control statuses of their personnel (e.g., employees). This is especially problematic for organizations with numerous assets and associated physical access control systems spread across multiple locations. Furthermore, many organizations still rely on virtual USB card readers to provision credentials from end user devices, rather than allowing the end users themselves to securely provision their own credentials to access control systems through a cloud-based channel secured by Single Sign-On (SSO).

Aspects of the present disclosure include an on-site and/or cloud-based user management system that uses personnel and/or credential pairings to perform access control decisions. One aspect of the present disclosure includes a method for controlling access with a credential. Another aspect of the present disclosure includes an apparatus for controlling access with a credential. Another aspect of the present disclosure includes an apparatus for controlling access with a credential.

In some aspects, at a user management system, a first credential associated with at least one of an end user or a mobile device of the end user is received, and a personnel profile of the end user is obtained.

In some aspects, based on the personnel profile, the first credential is mapped to a list of credentials authorized to access an asset associated with a physical access control security system.

In some aspects, the first credential is transmitted from the user management system to the physical access control security system.

In one aspect, the user management system is cloud-based. In another aspect, the user management system is on-site.

In one aspect, at least one of the end user or the mobile device is authorized to access the asset using the first credential.

In one aspect, it is determined, based on the personnel profile, whether the end user is authorized to access the asset. The first credential is added to the list of credentials in response to determining the end user is authorized to access the asset.

In one aspect, at least one of the end user or the mobile device is granted access to the asset if a second credential provided to an access control device is identical to the first credential.

In one aspect, the first credential comprises a unique digital key issued to the end user or the mobile device.

In one aspect, at the user management system, it is maintained, for each asset of a plurality of assets, a corresponding list of credentials authorized to access said asset.

In this specification, the terms "physical access control security system" and "physical access control system" are used interchangeably.

Turning now to the figures of the appended drawings, example aspects are depicted with reference to one or more components described herein.

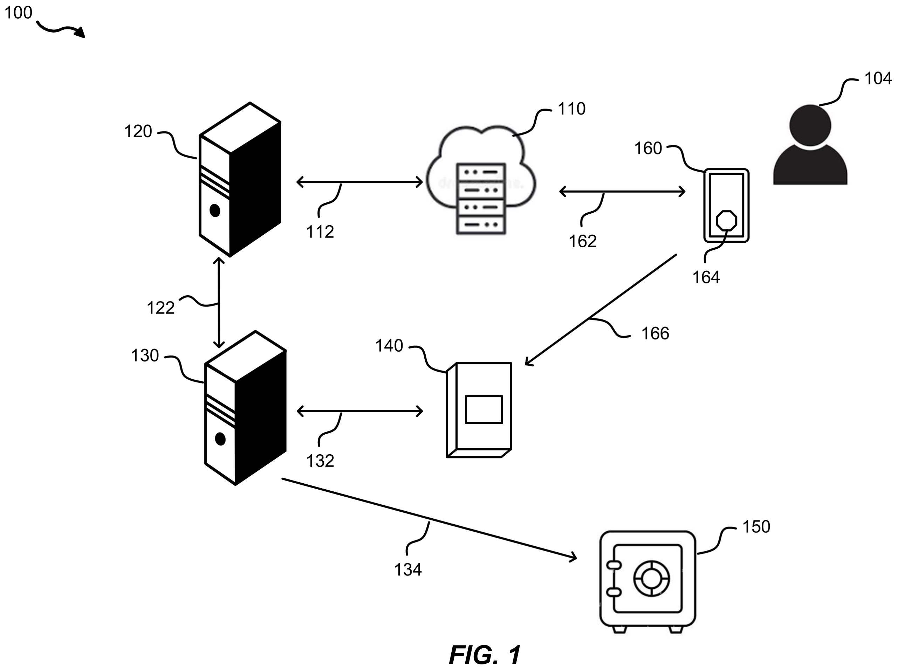

FIG. 1 is a diagram of an example environment 100 for managing credentials across virtual and physical access control systems, according to some aspects of the present disclosure. In some aspects, the environment 100 may include a user management system 110 configured to manage one or more personnel profiles (i.e., personnel records) 210 of one or more end users (e.g., end user 104) and/or one or more credentials (e.g., credential 164) associated with the one or more end users (or one or more devices of the one or more end users). The user management system 110 may be a cloud-based system and/or a local system. In some aspects, a cloud-based system may be a system that is hosted at a remote site. In some aspects, a local system may be a system that is hosted on-site.

An end user (e.g., end user 104) is anyone authorized to access a particular asset (e.g., asset 150) in the environment 100. Examples of an end user include, but are not limited to, an employee, a client, a customer, a student, a member, etc. A personnel profile 260 of an end user may include, but is not limited to, information (i.e., personnel profile information) relating to the end user, such as legal name, birthdate, domicile/residential address, social security number, etc. A credential may be associated with an end user or a device (e.g., mobile device 160) of the end user 104. A credential associated with an end user or an end user device of the end user may include, but is not limited to, information (i.e., credential information) used by the end user to access an asset such as, but not limited to, a user name and password, a personal identification number, etc. In one aspect, the credential information may comprise data and/or code for identifying the end user and/or the end user device of the end user. For example, a credential may be a unique digital key issued to the end user and/or the end user device of the end user to uniquely identify the end user and/or the end user device.

In some aspects, the environment 100 may include a physical access control system 120, an access control controller 130, and/or an access control reader 140. The physical access control system 120 is configured to provide one or more personnel profiles 260 of one or more end users (e.g., end user 104) and/or one or more credentials (e.g., credential 164) associated with the one or more end users (or one or more devices of the one or more end users) to one or more components of the environment 100, such as the access control controller 130.

The access control controller 130 is configured to communicate with the access control reader 140 to determine whether an end user (e.g., end user 104) is authorized to access an asset (e.g., asset 150).

In one non-limiting example aspect, the user management system 110 may be configured to manage one or more personnel profiles 260 of one or more employees of an organization and/or one or more credentials (e.g., credential 164) associated with the one or more employees (or one or more devices of the one or more employees). For example, for each employee of the organization, the user management system 110 may store, via a personnel profile of the employee and/or a credential associated with the employee (or one or more devices of employee), a corresponding name, a corresponding employee identifier, a corresponding birthdate, and/or corresponding social security number, along with a corresponding user name (e.g., network user name) and password the employee uses to access one or more assets (e.g., one or more computers).

In another non-limiting example aspect, the user management system 110 may be configured to manage one or more personnel profiles 260 of one or more members of a gymnasium and/or one or more credentials (e.g., a credential 164) associated with the one or more members (or one or more devices of the one or more members). For example, for each member of the gymnasium, the user management system 110 may store, as a personnel profile of the member and/or a credential associated with the member (or a device of the member), a corresponding name, a corresponding birthdate, and/or corresponding membership type, along with a corresponding personal identification number the member uses to access the gymnasium (e.g., when checking into the gymnasium). Other examples are also possible according to aspects of the present disclosure.

In some aspects, the physical access control system 120 is configured to receive (e.g., from the user management system 110) personnel profile and/or credential information, and provide the personnel profile information and/or credential information to the access control controller 130. The access control controller 130 may be configured to receive the personnel profile information and/or credential information from the physical access control system 120.

In one non-limiting example aspect, during normal operation, a mobile device 160 of an end user 104 may obtain a credential 164 associated with the end user 104 and/or the mobile device 160. In some aspects, the credential 164 may be downloaded onto the mobile device 160 from an external system. In some aspects, the credential 164 may be generated on the mobile device 160 using a secure application (e.g., a secure application executing/operating on the mobile device 160). Other aspects for downloading and/or generating the credential 164 may also be used.

Examples of a mobile device 160 include, but are not limited to, a mobile phone, a smart phone, a laptop, an electronic key fob, a tablet computer, a personal digital assistant, a radio frequency identifier (RFID) tag, a wearable device (e.g., a smart watch, a smart band, a head-mounted display, smart glasses, etc.), and/or other computerized devices.

In some aspects, a mobile device 160 comprises one or more input/output (I/O) units integrated in or coupled to the mobile device 160. An end user (e.g., end user 104) can utilize at least one I/O unit of the mobile device 160 to provide user input, etc. Examples of an I/O unit include, but are not limited to, a physical user interface (PUI) and/or a graphical user interface (GUI), such as a remote control, a keyboard, a keypad, a touch interface, a touch screen, a knob, a button, a display screen, etc.

In some aspects, the end user 104 may be anyone who is authorized to access an asset 150 in the environment 100. The mobile device 160 may be a device configured to present the credential 164. Credential information included in the credential 164 comprises any type of identifying information that is provided by the end user 104 (e.g., user name and password, personal identification member, etc.) for verifying whether the end user 104 is authorized to access the asset 150. Credential information included in the credential 164 may comprise data and/or code for identifying the end user 104 and/or the mobile device 160. The credential 164 may be provisioned to the mobile device 160 for identification of the end user 104 and/or the mobile device 160. In one aspect, the credential 164 may be a unique digital key issued to the mobile device 160 and/or the end user 104 to uniquely identify the mobile device 160 and/or the end user 104.

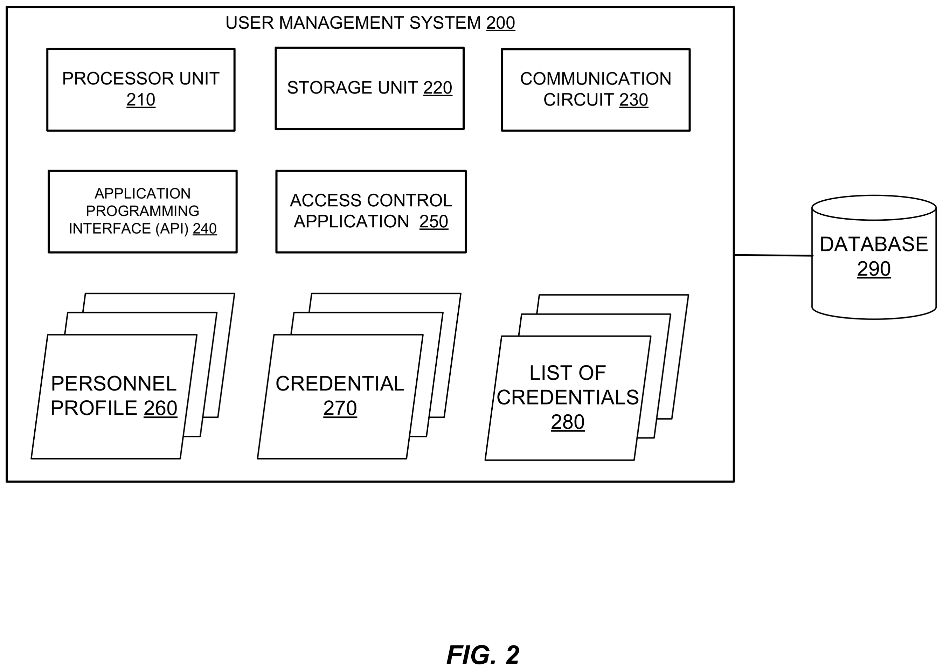

In some aspects, the mobile device 160 of the end user 104 may establish wireless and/or wired communication with the user management system 110 for the exchange of information. The user management system 110 may store personnel profile information (e.g., network user names and passwords, legal names, domicile/residential addresses, etc.) of one or more end users, including the end user 104. In some aspects, the user management system 110 may include an application programming interface (API) (e.g., API 240 in FIG. 2), such as a System for Cross-Domain Identity Management (SCIM)-compliant API, for communicating with the mobile device 160 via a first communication link 162. Further, the user management system 110 may use a communication circuit to receive the credential 164.

In some aspects, the user management system 110 may receive the credential 164 from the mobile device 160 via the first communication link 162. The user management system 110 may map one or more attributes of the user management system 110 to one or more attributes of the physical access control system 120. In one non-limiting example aspect, the user management system 110 may map the credential 164 and/or a personnel profile of the end user 104 to an asset (e.g., asset 150) associated with the physical access control system 120. In some aspects, the user management system 110 may map the credential 164 and/or the personnel profile to an asset associated with the physical access control system 120 by: (1) determining, based on the personnel profile, whether the end user 104 is authorized to access the asset, and (2) adding the credential 164 to a list of credentials that are authorized to access the asset in response to determining the end user 104 is authorized to access the asset. In some aspects, the user management system 110 may indicate to the physical access control system 120 that the end user 104 is authorized to access the asset using the credential 164 in response to determining the end user 104 is authorized to access the asset.

In some aspects, the user management system 110 may determine that the end user 104 is authorized to access the asset by determining a current status of the end user 104 (e.g., employee status, membership status, security clearance level, employee role, etc.). In some aspects, the user management system 110 may determine that the end user 104 is authorized to access the asset by determining a classification for the end user 104 (e.g., employee classification type, membership classification type, etc.).

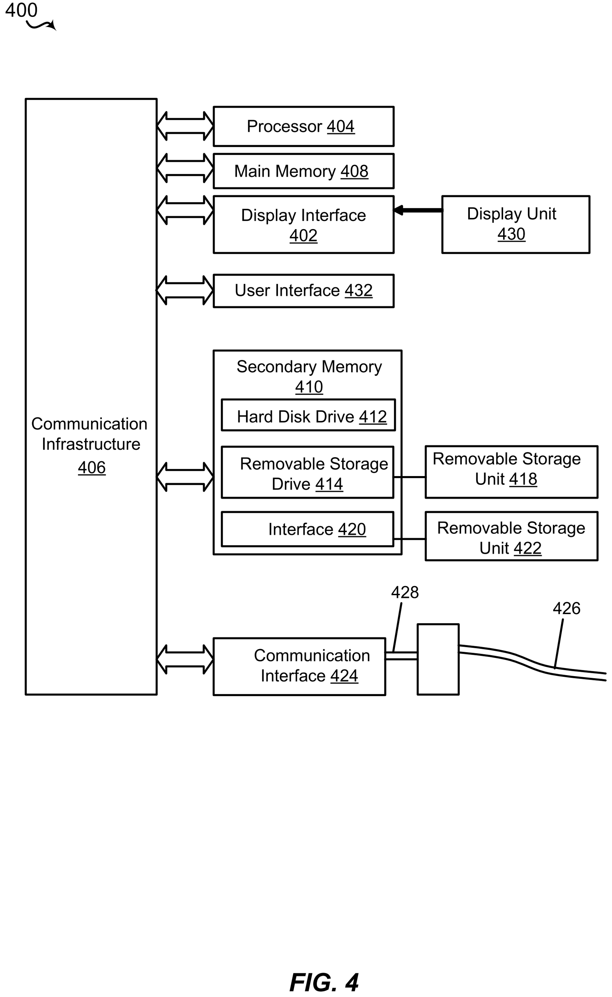

One or more systems in FIG. 1, such as the user management system 110, the physical access control system 120, the access control controller 130, and/or the access control reader 140, may include one or more components described in FIG. 4 below. Specifically, one or more of the user management system 110, the physical access control system 120, the access control controller 130, and/or the access control reader 140 may be implemented as the computer system 400 of FIG. 4, with more or less components adjusted according to aspects of the present disclosure.

In certain aspects, the user management system 110 may store the credential 164 and/or the list of credentials that are authorized to access the asset 150 in memory (e.g., storage unit 220 in FIG. 2). For example, one or more processor units (e.g., processor unit 210 in FIG. 2) of the user management system 110 may execute instructions stored in the memory to obtain a personnel profile of the end user 104 from the memory. In some aspects, the user management system 110 may store the personnel profile of the end user 104 in a local or remote database that maintains a plurality of personnel profiles of a plurality of end users. The one or more processor units of the user management system 110 may use identifiers (e.g., last name, first name, employee identifier, employer identifier, social security number, etc.) to locate the personnel profile of the end user 104.

In some aspects, the one or more processor units of the user management system 110 may determine, based on the personnel profile of the end user 104, whether the end user 104 is authorized to access the asset 150. Once the user management system 110 determines that the end user 104 is authorized to access the asset 150, the one or more processor units of the user management system 110 may add the credential 164 to the list of credentials that are authorized to access the asset 150.

Determining whether an end user is authorized to access an asset may include, for example, identifying the end user is authorized to access the asset or verifying the end user is authorized to access the asset. For example, the user management system 110 may identify a characteristic associated with the end user (e.g., high security clearance, high-ranking role in an organization, a supervisory role, etc.) that allows access to the asset. As another example, the user management system 110 may verify that the personnel profile 260 satisfies one or more access rules for the asset.

In certain aspects, the environment 100 may include one or more additional physical access control systems configured to manage one or more other environments, sites, and/or other assets.

In some aspects, the user management system 110 transmits the personnel profile of the end user 104 and/or the credential 164 to the physical access control system 120 via a second communication link 112. The physical access control system 120 may relay the personnel profile of the end user 104 and/or the credential 164 to the access control controller 130 via a third communication link 122. The physical access control system 120 may indicate to the access control controller 130 that the end user 104 is authorized to access the asset 150 using the credential 164. The access control controller 130 may receive the credential 164 from the physical access control system 120.

In some aspects, the end user 104 may provide the mobile device 160 to the access control reader 140 to gain access to the asset 150. Specifically, the mobile device 160 may provide 166 the credential 164 to the access control reader 140 to authenticate the end user 104 and/or the mobile device 160. Providing a credential may include, for example, transmitting the credential or presenting the credential. In one aspect, the mobile device 160 may transmit the credential 164 to the access control reader 140 via one or more of a Bluetooth channel, a near field communication (NFC) channel, a wireless fidelity (Wi-Fi) channel, etc. In other aspects, the mobile device 160 may present the credential 164 to the access control reader 140 as a visual code (e.g., a QR code, a bar code, an alphanumeric code, etc.). For example, the mobile device 160 may display the visual code when the mobile device 160 is presented to the access control reader 140, and the access control reader 140 is configured to read or scan the visual code. Other methods of providing the credential 164 may also be implemented according to aspects of the present disclosure. The mobile device 160 may be triggered by an input to provide the credential 164. In other aspects, the mobile device 160 may receive an internal signal (e.g., user input from the end user 104) and/or an external signal (e.g., an interrogating signal from the access control reader 140). In response to the received signal, the mobile device 160 may provide the credential 164. In some aspects, the end user 106 may provide the credential 164 via a PUI and/or a GUI of the access control reader 140, such as a remote control, a keyboard, a keypad, a touch interface, a touch screen, a knob, a button, a display screen, etc.

In some aspects, the access control reader 140 may receive the credential 164 from the mobile device 160. The access control reader 140 may transmit the received credential 164 to the access control controller 130 via a fourth communication link 132. The access control controller 130 may then perform an authentication and/or access grant process. In some aspects, during the authentication and/or access grant process, the access control controller 130 may authenticate the mobile device 160 and/or the end user 104 by confirming that the credential 164 received at the access control reader 140 (from the mobile device 160) is identical to the credential 164 provided by the physical access control system 120. Therefore, the authentication and/or access grant process involves comparing two credentials, i.e., a first credential relayed by the physical access control system 120 from the user management system 110, and a second credential received at the access control reader 140 from the mobile device 160. Once authenticated, the access control controller 130 may transmit a signal 134 to the asset 150 to grant the end user 104 and/or the mobile device 160 access to the asset 150. In alternative aspects, the access control controller 130 may transmit the signal 134 to an electronic lock (not shown) associated with the asset 150 to grant the end user 104 and/or the mobile device 160 access to the asset 150. In yet another aspect, the access control controller 130 may transmit the signal 134 to a display to indicate that the end user 104 and/or the mobile device 160 is authorized to access to the asset 150.

In alternative aspects of the present disclosure, the access control reader 140 may perform the authentication and/or access grant process described above.

Here, a communication link (e.g., first communication link 162, second communication link 112, third communication link 122, fourth communication link 132) may include any medium that allows the transmission/reception/exchange of information. A communication link may be a wired and/or wireless communication link (e.g., a wireless connection such as a Wi-Fi connection or a cellular data connection, a wired connection, or a combination of the two). In some aspects, a communication link may be copper wires, fiber optics lines, or other solid wires configured to carry electrical and/or optical signals. In other aspects, a communication link may be a wireless communication channel (having a certain frequency) that allows the wireless transmission/reception/exchange of information.

In certain aspects of the present disclosure, two or more systems in FIG. 1 may be combined. In some aspects, the user management system 110 and the physical access control system 120 may be combined into a single physical or cloud-based system. In another aspect, the physical access control system 120 and the access control controller 130 may be combined into a single system. Other combinations are also possible according to various aspects of the present disclosure.

The access control reader 140 may be an access control device (e.g., card reader, keypad, number pad, etc.) that can interact with an internet-enabled end user device (e.g., mobile device 160). In some aspects, the environment 100 may support, via a server (such as one implemented with SCIM) automatic provisioning of personnel from a generic SSO provider (that may support SCIM) to one or more physical access control systems.

In certain aspects, an end user may perform authentication with the SSO provider from an end user device (e.g., mobile device 160). The end user device may store the personnel credential in a secure enclave to leverage APIs provided by the SSO provider and transmit a copy of the credential over secure channels to the SSO provider. In one non-limiting example aspect, an employee's mobile device acts as an access control credential. The employee can use APIs offered by virtual access control providers to authenticate on the mobile device using SSO (e.g., in a browser of the mobile device). Using APIs offered by SSO providers, the employee can move the credential from a secure enclave of the mobile device to the cloud. This allows SSO providers to provision automatically not only personnel to physical access control systems, but also credentials. In some aspects, SCIM is not used and an end user device leverages only third-party APIs.

In one aspect, the user management system 110 is a virtual access control system that may provision credentials to the physical access control system 120, allowing the automatic provisioning of both personnel and credentials to the physical access control system 120. In certain aspects, end users may securely provision their own credentials to the virtual access control system through a cloud-based channel secured by SSO.

By allowing the syncing of personnel in the physical access control system 120 with users in the virtual access control system (i.e., user management system 110) via personnel and/or credential pairings, organizations are offered an automated solution for digitally maintaining both virtual and physical access control statuses of their personnel (e.g., employees) which in turn maintains physical security on their sites (i.e., assets and associated physical access control systems spread across multiple locations).

FIG. 2 is a block diagram of an example user management system 200, according to some aspects of the present disclosure. In some aspects, the user management system 110 in FIG. 1 is implemented as the user management system 200. In some aspects, the user management system 200 may include computing resources, such as one or more processor units 210 and one or more storage units 220. One or more applications may execute/operate on the user management system 200 utilizing the computing resources of the user management system 200.

In some aspects, the one or more applications executing/operating on the user management system 200 may include an access control application 250 for managing credentials across virtual and physical access control systems. In one aspect, the access control application 250 is configured to receive a credential 270 (e.g., credential 164 in FIG. 1) associated with an end user (e.g., end user 104 in FIG. 1) or a mobile device (e.g., mobile device 160 in FIG. 1) of the end user. The access control application 250 may store the credential 270 in memory (e.g., one or more storage units 220).

The access control application 250 is further configured to obtain a personnel profile (i.e., personnel record) 260 of the end user from the memory. The access control application 250 may use one or more identifiers (e.g., last name, first name, employer identifier, social security number, etc.) to locate the personnel profile 260.

The access control application 250 is further configured to map the credential 270 to a list 280 of credentials that are authorized to access an asset (e.g., asset 150 in FIG. 1) of a physical access control security system (e.g., physical access control system 120 in FIG. 1) based on the personnel profile 260. In one aspect, the access control application 250 determines, based on the personnel profile 260, whether the end user is authorized to access the asset. Determining whether an end user is authorized to access an access may include, for example, identifying the end user is authorized to access the asset or verifying the end user is authorized to access the asset. For example, the access control application 250 may identify a characteristic associated with the end user (e.g., high security clearance, high-ranking role in an organization, a supervisory role, etc.) that allows access to the asset. As another example, the access control application 250 may verify that the personnel profile 260 satisfies one or more access rules for the asset. Once the access control application 250 determines that the end user is authorized to access the asset, the access control application 250 may add the credential 270 to the list 280 of credentials authorized to access the asset.

The access control application 250 is further configured to transmit the credential 270 to the physical access control security system. The access control application 250 may indicate to the physical access control security system that the end user is authorized to access the asset using the credential 270.

In some aspects, the user management system 200 stores a plurality of personnel profiles 260 of a plurality of end users in a local or remote database 290. In some aspects, the user management system 200 stores a plurality of credentials 270 associated with a plurality of end users and/or a plurality of mobile devices of the end users in the database 290.

In some aspects, the user management system 200 stores a plurality of lists 280 of credentials in the database 290. Each list 280 of the plurality of lists 280 corresponds to a particular asset of a plurality of assets. Each list 280 of the plurality of lists 280 identifies one or more credentials that are authorized to access a corresponding asset. Therefore, the user management system 200 maintains, for each asset of the plurality of assets, a corresponding list 280 of credentials that are authorized to access the asset.

In some aspects, the user management system 200 may include a communication circuit 230 configured to exchange data with a mobile device 160 and/or a physical access control system 120 over one or more communication links (e.g., first communication link 162, second communication link 112). The communication circuit 230 may comprise any suitable communications circuitry operative to connect to a communications network and to exchange communications operations and media between the user management system 200 and other systems/devices (e.g., a mobile device 160 and/or a physical access control system 120) connected to the same communications network. The communication circuit 230 may be operative to interface with a communications network using any suitable communications protocol such as, for example, Wi-Fi (e.g., an IEEE 802.11 protocol), Bluetooth^{®}, high frequency systems (e.g., 900 MHz, 2.4 GHz, and 5.6 GHz communication systems), infrared, GSM, GSM plus EDGE, CDMA, quadband, and other cellular protocols, VOIP, TCP-IP, or any other suitable protocol.

In some aspects, the user management system 110 may include an API 240, such as a SCIM-compliant API, for communicating with a mobile device 160.

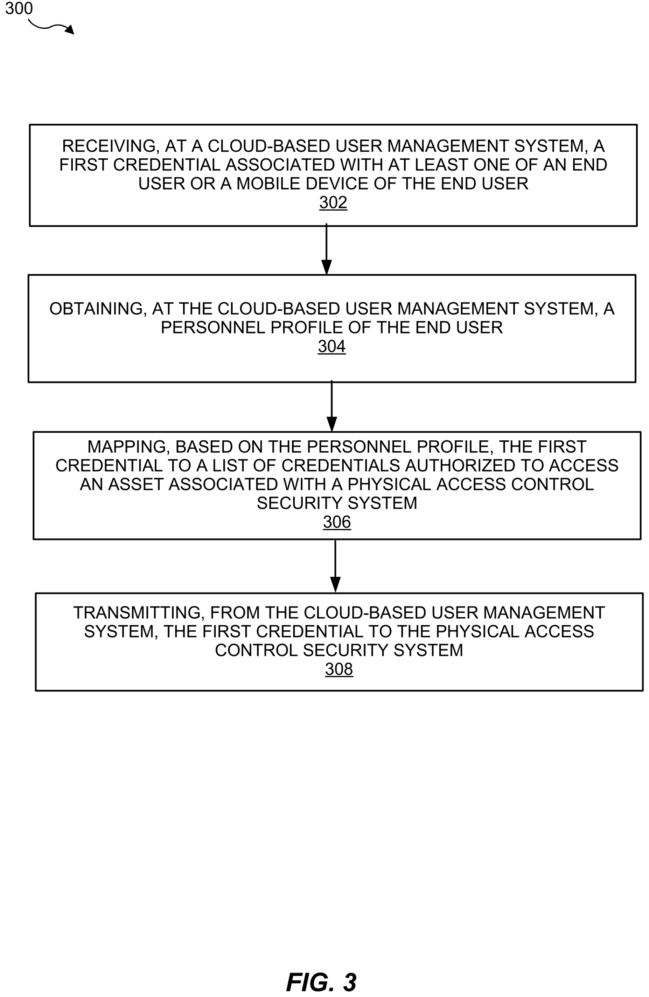

FIG. 3 is flow diagram of an example method 300 for managing credentials across virtual and physical access control systems, according to some aspects of the present disclosure.

At block 302, the method 300 includes receiving, at a cloud-based user management system (e.g., user management system 110 in FIG. 1 or user management system 200 in FIG. 2), a first credential (e.g., credential 164 in FIG. 1 or credential 270 in FIG. 2) associated with at least one of an end user (e.g., end user 104 in FIG. 1) or a mobile device (e.g., mobile device 160 in FIG. 1) of the end user. For example, the user management system 110/200 may be configured to, and/or provide means for, receiving a first credential associated with an end user or a mobile device of the end user. For example, the user management system 110/200 may receive the first credential via a wired and/or wireless communication link (e.g., first communication link 162 in FIG. 1). The user management system 110/200 may store the first credential in memory (e.g., storage unit 220 in FIG. 2).

At block 304, the method 300 includes obtaining, at the cloud-based user management system, a personnel profile (e.g., personnel profile 260 in FIG. 2) of the end user. For example, the user management system 110/200 may be configured to, and/or provide means for, obtaining a personnel profile of the end user. In some aspects, one or more processor units (e.g., processor unit 210 in FIG. 2) of the user management system 110/200 may execute instructions stored in the memory (e.g., execute/operate access control application 250 in FIG. 2) to obtain the personnel profile from the memory. In some aspects, the personnel profile may be stored in a local or remote database (e.g., database 290 in FIG. 2) that includes a plurality of personnel profiles of a plurality of end users. The one or more processor units of the user management system 110/200 may use identifiers (e.g., last name, first name, employer identifier, social security number, etc.) to locate the personnel profile.

At block 306, the method 300 includes mapping, based on the personnel profile, the first credential to a list (e.g., list 280 in FIG. 2) of credentials authorized to access an asset (e.g., asset 150) associated with a physical access control security system (e.g., physical access control system 120). For example, the user management system 110/200 may be configured to, and/or provide means for, mapping the first credential to a list of credentials authorized to access an asset associated with a physical access control security system. In certain aspects, the one or more processor units of the user management system 110/200 may execute instructions stored in the memory (e.g., execute/operate access control application 250 in FIG. 2) to determine, based on the personnel profile, whether the end user is authorized to access the asset. Once the user management system 110 determines that the end user is authorized to access the asset, the one or more processor units of the user management system 110/200 may execute instructions stored in the memory (e.g., execute/operate access control application 250 in FIG. 2) to add the first credential to the list of credentials authorized to access the asset.

At block 308, the method 300 includes transmitting, from the cloud-based user management system, the first credential to the physical access control security system. For example, the user management system 110/200 may be configured to, and/or provide means for, transmitting the first credential to the physical access control security system. In some aspects, the one or more processor units of the user management system 110/200 may execute instructions stored in the memory (e.g., execute/operate access control application 250 in FIG. 2) to send the first credential to the physical access control security system via a wired and/or wireless communication link (e.g., second communication link 112 in FIG. 1). The one or more processor units of the user management system 110/200 may execute instructions stored in the memory (e.g., execute/operate access control application 250 in FIG. 2) to indicate to the physical access control security system that at least one of the end user or the mobile device is authorized to access the asset using the first credential.

In some aspects, blocks 302-308 of the method 300 may be performed by one or more components of the user management system 110 and/or the user management system 200.

Aspects of the present disclosures, such as the user management system 110, the physical access control system 120, the access control controller 130, and/or the access control reader 140, may be implemented using hardware, software, or a combination thereof and may be implemented in one or more computer systems or other processing systems. In an aspect of the present disclosures, features are directed toward one or more computer systems capable of carrying out the functionality described herein. An example of such a computer system 400 is shown in FIG. 4. The user management system 110, the physical access control system 120, the access control controller 130, and/or the access control reader 140 may include some or all of the components of the computer system 400.

Referring to FIG. 4, in operation for managing credentials and/or personnel profile for access control, the computer system 400 may implement at least a portion of one or more components in FIG. 1 above, such as all or at least a portion of the user management system 110, the physical access control system 120, the access control controller 130, the access control reader 140, and/or any other component configured for managing credentials and/or personnel profile for access control. In this case, the computer system 400 may perform any one or any combination of blocks 302-308 of the method 300 such as via execution of an access control application 250 (FIG. 2) by one or more processors (e.g., the processor 404) individually, as a subgroup, or in combination, and/or one or more memories 408 and/or 410 individually, as a subgroup, or in combination. Specifically, the computer system 400 may be configured to perform any one or any combination of blocks 302-308 of the method 300 for performing an aspect of managing credentials and/or personnel profile for access control, as described herein.

The computer system 400 includes one or more processors, such as processor 404. The processor 404 is connected with a communication infrastructure 406 (e.g., a communications bus, cross-over bar, or network). The term "bus," as used herein, can refer to an interconnected architecture that is operably connected to transfer data between computer components within a singular or multiple systems. The bus can be a memory bus, a memory controller, a peripheral bus, an external bus, a crossbar switch, and/or a local bus, among others. Various software aspects are described in terms of this example computer system. After reading this description, it will become apparent to a person skilled in the relevant art(s) how to implement aspects of the disclosures using other computer systems and/or architectures.

The computer system 400 may include a display interface 402 that forwards graphics, text, and other data from the communication infrastructure 406 (or from a frame buffer not shown) for display on a display unit 430.

The computer system 400 may include a user interface 432 operable to receive inputs from a user of the computer system 400 and further operable to generate outputs for presentation to the user (e.g., via the display interface 402 to a display unit 430). The user interface 432 may include one or more input devices, including but not limited to a keyboard, a number pad, a mouse, a touch-sensitive display, a navigation key, a function key, a microphone, a voice recognition component, or any other mechanism capable of receiving an input from a user, or any combination thereof. Further, the user interface 432 may include one or more output devices, including but not limited to a display interface, a speaker, a haptic feedback mechanism, a printer, any other mechanism capable of presenting an output to a user, or any combination thereof.

Computer system 400 also includes one or more memories, such as main memory 408, preferably random access memory (RAM). The one or more memories may also include a secondary memory 410. The secondary memory 410 may include, for example, a hard disk drive 412, and/or a removable storage drive 414, representing a floppy disk drive, a magnetic tape drive, an optical disk drive, a universal serial bus (USB) flash drive, etc. The removable storage drive 414 reads from and/or writes to a removable storage unit 418 in a well-known manner. Removable storage unit 418 represents a floppy disk, magnetic tape, optical disk, USB flash drive etc., which is read by and written to removable storage drive 414. As will be appreciated, the removable storage unit 418 includes a computer usable storage medium having stored therein computer software and/or data. In some examples, one or more of the main memory 408, the secondary memory 410, the removable storage unit 418, and/or the removable storage unit 422 may be a non-transitory memory. In some examples, one or more of the main memory 408, the secondary memory 410, the removable storage unit 418, and/or the removable storage unit 422 may include a data store, which can be any suitable combination of hardware and/or software, that provides for mass storage of information, databases, and programs. For example, the data store may be or may include a data repository for applications and/or related parameters not currently being executed by one or more processors (e.g., the processor 404) individually, as a subgroup, or in combination. As another example, the data store may be a data repository for an operating system, application, display driver, etc., executing on one or more processors (e.g., the processor 404) individually, as a subgroup, or in combination, and/or one or more other components of the computer system 400.

Alternative aspects of the present disclosures may include secondary memory 410 and may include other similar devices for allowing computer programs or other instructions to be loaded into computer system 400. Such devices may include, for example, a removable storage unit 422 and an interface 420. Examples of such may include a program cartridge and cartridge interface (such as that found in video game devices), a removable memory chip (such as an erasable programmable read only memory (EPROM), or programmable read only memory (PROM)) and associated socket, and other removable storage units 422 and interfaces 420, which allow software and data to be transferred from the removable storage unit 422 to computer system 400.

Computer system 400 may also include a communications interface 424. Communications interface 424 allows software and data to be transferred between computer system 400 and external devices. Examples of communications interface 424 may include a modem, a network interface (such as an Ethernet card), a communications port, a Personal Computer Memory Card International Association (PCMCIA) slot and card, etc. Software and data transferred via communications interface 424 are in the form of signals 428, which may be electronic, electromagnetic, optical or other signals capable of being received by communications interface 424. These signals 428 are provided to communications interface 424 via a communications path (e.g., channel) 426. This path 426 carries signals 428 and may be implemented using wire or cable, fiber optics, a telephone line, a cellular link, an RF link and/or other communications channels. In this document, the terms "computer program medium" and "computer usable medium" are used to refer generally to media such as a removable storage drive 414, a hard disk installed in hard disk drive 412, and signals 428. These computer program products provide software to the computer system 400. Aspects of the present disclosures are directed to such computer program products.

Computer programs (also referred to as computer control logic) are stored in main memory 408 and/or secondary memory 410. Computer programs may also be received via communications interface 424. Such computer programs, when executed, enable the computer system 400 to perform the features in accordance with aspects of the present disclosures, as discussed herein. In particular, the computer programs, when executed, enable the processor 404 to perform the features in accordance with aspects of the present disclosures. Accordingly, such computer programs represent controllers of the computer system 400.

In an aspect of the present disclosures where the method is implemented using software, the software may be stored in a computer program product and loaded into computer system 400 using removable storage drive 414, hard drive 412, or communications interface 420. The control logic (software), when executed by the processor 404, causes the processor 404 to perform the functions described herein. In another aspect of the present disclosures, the system is implemented primarily in hardware using, for example, hardware components, such as application specific integrated circuits (ASICs). Implementation of the hardware state machine so as to perform the functions described herein will be apparent to persons skilled in the relevant art(s).

It will be appreciated that various implementations of the above-disclosed and other features and functions, or alternatives or varieties thereof, may be desirably combined into many other different systems or applications. Also that various presently unforeseen or unanticipated alternatives, modifications, variations, or improvements therein may be subsequently made by those skilled in the art which are also intended to be encompassed by the following claims.

Further embodiments of the present invention may be summarized as follows. Any of these embodiments can be claimed in a separate claim, e.g. by substituting the word "Embodiment" by "Claim", in particular in the order as mentioned below and/or in any combination with any embodiment described above or with any of the features of the attached claims.

Embodiment 1. A method for controlling access with a credential, comprising:
receiving, at a user management system, a first credential associated with at least one of an end user or a mobile device of the end user;
obtaining, at the user management system, a personnel profile of the end user;
mapping, based on the personnel profile, the first credential to a list of credentials authorized to access an asset associated with a physical access control security system; and
transmitting, from the user management system, the first credential to the physical access control security system.

Embodiment 2. The method of embodiment 1, wherein the user management system is cloud-based.

Embodiment 3. The method of embodiment 1 or 2, wherein the user management system is on-site.

Embodiment 4. The method of any of embodiments 1 to 3, wherein the mapping comprises:
determining, based on the personnel profile, whether the end user is authorized to access the asset; and
adding the first credential to the list of credentials in response to determining the end user is authorized to access the asset.

Embodiment 5. The method of any of embodiments 1 to 4, wherein at least one of the end user or the mobile device is authorized to access the asset using the first credential.

Embodiment 6. The method of any of embodiments 1 to 5, wherein at least one of the end user or the mobile device is granted access to the asset if a second credential provided to an access control device is identical to the first credential.

Embodiment 7. The method of any of embodiments 1 to 6, wherein the first credential comprises a unique digital key issued to the end user or the mobile device.

Embodiment 8. The method of any of embodiments 1 to 7, further comprising:
maintaining, at the user management system, for each asset of a plurality of assets,
a corresponding list of credentials authorized to access said asset.

Embodiment 9. A system for controlling access with a credential, comprising:
one or more memories configured to store executable instructions; and
one or more processors communicatively coupled with the one or more memories and
configured to execute the executable instructions to:
   receive, at a user management system, a first credential associated with at least one of an end user or a mobile device of the end user;
   obtain, at the user management system, a personnel profile of the end user;
   map, based on the personnel profile, the first credential to a list of credentials authorized to access an asset associated with a physical access control security system; and transmit, from the user management system, the first credential to the physical access control security system.

Embodiment 10. The system of embodiment 9, wherein the user management system is cloud-based.

Embodiment 11. The system of embodiment 9 or 10, wherein the user management system is on-site.

Embodiment 12. The system of any of embodiments 9 to 11, wherein at least one of the end user or the mobile device is authorized to access the asset using the first credential.

Embodiment 13. The system of any of embodiments 9 to 12, wherein the map includes the one or more processors further configured to execute the executable instructions to:
determine, based on the personnel profile, whether the end user is authorized to access the asset; and
add the first credential to the list of credentials in response to determining the end user is authorized to access the asset.

Embodiment 14. The system of any of embodiments 9 to 13, wherein at least one of the end user or the mobile device is granted access to the asset if a second credential provided to an access control device is identical to the first credential.

Embodiment 15. The system of any of embodiments 9 to 14, wherein the first credential comprises a unique digital key issued to the end user or the mobile device.

Embodiment 16. The system of any of embodiments 9 to 15, further comprising: maintaining, at the user management system, for each asset of a plurality of assets,
a corresponding list of credentials authorized to access said asset.

Embodiment 17. An apparatus for controlling access with a credential, comprising:
means for receiving, at a user management system, a first credential associated with at least one of an end user or a mobile device of the end user;
means for obtaining, at the user management system, a personnel profile of the end user;
means for mapping, based on the personnel profile, the first credential to a list of credentials authorized to access an asset associated with a physical access control security system; and
means for transmitting, from the user management system, the first credential to the physical access control security system.

Embodiment 18. The apparatus of embodiment 17, wherein the user management system is cloud-based.

Embodiment 19. The apparatus of embodiment 17 or 18, wherein the user management system is on-site.

Embodiment 20. The apparatus of any of embodiments 17 to 19, wherein at least one of the end user or the mobile device is authorized to access the asset using the first credential.

Embodiment 21. The apparatus of any of embodiments 17 to 20, wherein the mapping comprises:
means for determining, based on the personnel profile, whether the end user is authorized to access the asset; and
means for adding the first credential to the list of credentials in response to determining the end user is authorized to access the asset.

Embodiment 22. The apparatus of any of embodiments 17 to 21, wherein at least one of the end user or the mobile device is granted access to the asset if a second credential provided to an access control device is identical to the first credential.

Embodiment 23. The apparatus of any of embodiments 17 to 22, wherein the first credential comprises a unique digital key issued to the end user or the mobile device.

Embodiment 24. The apparatus of any of embodiments 17 to 23, further comprising:
means for maintaining, at the user management system, for each asset of a
plurality of assets, a corresponding list of credentials that are authorized to access said asset.

In an Embodiment, one or more computer-readable non-transitory storage media may embody software that is operable when executed to perform a method according to or within any of the above-mentioned Embodiments.

In an Embodiment, a system may comprise: one or more processors; and at least one memory coupled to the processors and comprising instructions executable by the processors, the processors operable when executing the instructions to perform a method according to or within any of the above-mentioned Embodiments.

In an Embodiment, a computer program product, preferably comprising a computer-readable non-transitory storage media, may be operable when executed on a data processing system to perform a method according to or within any of the above-mentioned embodiments.

## Claims

1. A method for controlling access with a credential, comprising:
receiving, at a user management system, a first credential associated with at least one of an end user or a mobile device of the end user;
obtaining, at the user management system, a personnel profile of the end user;
mapping, based on the personnel profile, the first credential to a list of credentials authorized to access an asset associated with a physical access control security system; and
transmitting, from the user management system, the first credential to the physical access control security system.

2. The method of claim 1, wherein the user management system is cloud-based and/or on-site.

3. The method of claim 1 or 2, wherein the mapping comprises:
determining, based on the personnel profile, whether the end user is authorized to access the asset; and
adding the first credential to the list of credentials in response to determining the end user is authorized to access the asset.

4. The method of any of claims 1 to 3, wherein at least one of the end user or the mobile device is authorized to access the asset using the first credential; and/or
wherein at least one of the end user or the mobile device is granted access to the asset if a second credential provided to an access control device is identical to the first credential; and/or
wherein the first credential comprises a unique digital key issued to the end user or the mobile device.

5. The method of any of claims 1 to 4, further comprising:
maintaining, at the user management system, for each asset of a plurality of assets,
a corresponding list of credentials authorized to access said asset.

6. A system for controlling access with a credential, comprising:
one or more memories configured to store executable instructions; and
one or more processors communicatively coupled with the one or more memories and configured to execute the executable instructions to:
receive, at a user management system, a first credential associated with at least one of an end user or a mobile device of the end user;
obtain, at the user management system, a personnel profile of the end user;
map, based on the personnel profile, the first credential to a list of credentials authorized to access an asset associated with a physical access control security system; and
transmit, from the user management system, the first credential to the physical access control security system.

7. The system of claim 6, wherein the user management system is cloud-based and/or on-site.

8. The system of claim 6 or 7, wherein the map includes the one or more processors further configured to execute the executable instructions to:
determine, based on the personnel profile, whether the end user is authorized to access the asset; and
add the first credential to the list of credentials in response to determining the end user is authorized to access the asset.

9. The system of any of claims 6 to 8, wherein at least one of the end user or the mobile device is authorized to access the asset using the first credential; and/or
wherein at least one of the end user or the mobile device is granted access to the asset if a second credential provided to an access control device is identical to the first credential; and/or
wherein the first credential comprises a unique digital key issued to the end user or the mobile device.

10. The system of any of claims 6 to 9, further comprising:
maintaining, at the user management system, for each asset of a plurality of assets, a corresponding list of credentials authorized to access said asset.

11. An apparatus for controlling access with a credential, comprising:
means for receiving, at a user management system, a first credential associated with at least one of an end user or a mobile device of the end user;
means for obtaining, at the user management system, a personnel profile of the end user;
means for mapping, based on the personnel profile, the first credential to a list of credentials authorized to access an asset associated with a physical access control security system; and
means for transmitting, from the user management system, the first credential to the physical access control security system.

12. The apparatus of claim 11, wherein the user management system is cloud-based and/or on-site.

13. The apparatus of claim 11 or 12, wherein the mapping comprises:
means for determining, based on the personnel profile, whether the end user is authorized to access the asset; and
means for adding the first credential to the list of credentials in response to determining the end user is authorized to access the asset.

14. The apparatus of any of claims 11 to 13, wherein at least one of the end user or the mobile device is authorized to access the asset using the first credential; and/or
wherein at least one of the end user or the mobile device is granted access to the asset if a second credential provided to an access control device is identical to the first credential; and/or
wherein the first credential comprises a unique digital key issued to the end user or the mobile device.

15. The apparatus of any of claims 11 to 14, further comprising:
means for maintaining, at the user management system, for each asset of a plurality of assets, a corresponding list of credentials that are authorized to access said asset.
